**Europäisches Patentamt**

**European Patent Office**

(19)

**Office européen des brevets**

(11) Numéro de publication: **0 042 330**
**B1**

(12) **FASCICULE DE BREVET EUROPEEN**

(45) Date de publication du fascicule du brevet:
03.10.84

(51) Int. Cl.³: **F 16 D 3/08**

(21) Numéro de dépôt: **81400924.7**

(22) Date de dépôt: **11.06.81**

(54) **Mécanisme d'accouplement homocinétique.**

(30) Priorité: **16.06.80 FR 8013289**

(43) Date de publication de la demande:
**23.12.81 Bulletin 81/51**

(45) Mention de la délivrance du brevet:
**03.10.84 Bulletin 84/40**

(84) Etats contractants désignés:
**DE FR GB IT NL SE**

(56) Documents cités:
**FR - A - 1 482 836**
**FR - A - 2 274 827**
**US - A - 1 334 388**

(73) Titulaire: **ECOLE CENTRALE DES ARTS ET MANUFACTURES, Grande Voie des Vignes, F-92290 Chatenay-Malabry (FR)**

(72) Inventeur: **Herve, Jacques, 16, rue Bonnard, F-92260 Fontenay aux Roses (FR)**

(74) Mandataire: **Peuscet, Jacques, 3, Square de Maubeuge, F-75009 Paris (FR)**

ACTORUM AG

## Description

La présente invention a trait à un mécanisme d'accouplement homocinétique entre deux arbres rotatifs.

On sait qu'il est souvent nécessaire de transmettre un mouvement de rotation entre un arbre menant entraîné par un organe moteur et un arbre mené qui fait avec le précédent un angle variable. Pour lier les rotations de deux axes concourants, on connaît l'articulation à cardan qui est d'une réalisation relativement simple mais qui présente un double inconvénient: en premier lieu, le rapport des vitesses de rotation des deux arbres n'est pas constant en cours de rotation et il varie à chaque tour entre un maximum et un minimum qui est fonction de l'angle des axes des deux arbres; en deuxième lieu, une transmission de ce type n'est pratiquement réalisable de façon satisfaisante que si l'angle des axes des arbres est compris entre 135 et 180°.

On a déjà proposé un joint homocinétique permettant de transformer une rotation autour d'un axe en une rotation autour d'un axe concourant avec le premier en conservant la vitesse angulaire: un tel joint connu sous le nom de «joint de Koenigs» a, en particulier, été décrit dans l'ouvrage «Leçons de Cinématique» de Raoul Bricard, tome II, pages 203–204, édité chez Gauthier-Villars en 1927. L'utilisation d'un tel accouplement a d'ailleurs été proposée dans le brevet français n° 2 274 827. Avec un tel dispositif, on peut faire varier l'angle des axes concourants des deux arbres accouplés entre 45 et 315°, mais il se présente un inconvénient essentiel qui annule la fiabilité de fonctionnement lorsque l'angle des arbres varie au voisinage de 180°. En effet, un dispositif de ce type comporte, sur chaque arbre, un cylindre dans lequel peut coulisser et tourillonner une tige dont l'axe est parallèle à l'axe de l'arbre mais décalée par rapport à celui-ci; les deux tiges associées aux deux cylindres ont leurs axes concourants et sont articulées autour d'un axe perpendiculaire au plan formé par les deux axes concourants des deux arbres; bien entendu, il est possible d'associer plusieurs couples de tiges à un même couple de cylindres, tous les axes d'articulation des deux tiges d'un même couple étant parallèles. Si l'angle formé par les deux arbres est égal à 180°, c'est-à-dire si les axes des deux arbres sont alignés, il est clair que les axes des deux tiges d'un même couple sont également alignés et que, par conséquent, rien ne s'oppose à ce qu'un couple de tiges tourillonne dans les deux cylindres associés aux deux arbres. Dans ce cas, l'axe d'articulation de ce couple de tiges ne reste pas parallèle aux axes des autres couples et il devient totalement impossible de faire varier ultérieurement l'angle des axes des deux arbres, c'est-à-dire que l'articulation des deux arbres ne peut plus se plier. Pour tenter de remédier à cet inconvénient, on a imaginé, lorsque les tiges sont dans la position qui correspond à un alignement des deux arbres, de lier mécaniquement les rotations des tiges des différents couples, ce qui impose déjà une complexité de réalisation non négligeable; mais en outre, ce palliatif, s'il permet de maintenir le parallélisme de tous les axes d'articulation des couples de tiges, ne permet pas d'assurer que la direction de ces axes reste constante dans l'espace par rapport au plan initialement défini par les axes des deux arbres accouplés; il en résulte que, si l'axe de l'un des arbres est fixe, il n'est pas possible d'assurer que l'axe de l'autre arbre soit maintenu dans un plan fixe lorsque l'accouplement passe par la position où les deux arbres sont alignés. En d'autres termes, si le plan de déplacement de l'arbre mobile est imposé, le fait de rendre solidaires les rotations des tiges des différents couples quand les deux arbres sont alignés n'empêche pas que tous les axes d'articulation des couples de tiges peuvent se décaler par rapport à la direction normale au plan de débattement imposé pour l'arbre mobile, auquel cas l'accouplement est bloqué dans la position d'alignement et ne peut plus jouer son rôle d'accouplement à angle variable. Dans ce dispositif, les deux arbres tourillonnent dans des manchons qui sont articulés l'un par rapport à l'autre au moyen d'un contre-losange articulé dont l'utilisation est possible en raison du fait que les axes des deux arbres sont concourants.

On a également proposé dans le brevet français 1 482 836 une unité de transmission énergétique pour commander la rotation d'un arbre à partir d'une alimentation en fluide sous pression; l'arbre mené est solidaire d'un organe de liaison cylindrique mené, de même axe, maintenu dans un manchon par rapport auquel il tourillonne; l'organe de liaison cylindrique mené est relié à un organe de liaison cylindrique menant par une pluralité de couples de deux tiges assemblées par une articulation permettant leur rotation relative autour d'un axe d'articulation, chacune des deux tiges pouvant coulisser et tourillonner librement dans l'organe de liaison qui lui est associé de façon que son axe reste parallèle à l'axe dudit organe de liaison; les axes des organes de liaison menant et mené ne sont pas concourants; les axes d'articulation des tiges d'un même couple de tiges sont parallèles à l'axe d'articulation autour duquel s'effectue le pivotement relatif des deux organes de liaison cylindriques. Le pivotement relatif des deux organes de liaison est assuré au moyen d'un axe réalisant une articulation cylindrique. Cependant, le domaine technique considéré est tout à fait différent car un tel dispositif ne constitue pas un mécanisme d'accouplement homocinétique; il requiert la présence d'un fluide sous pression et fournit, selon l'angle des axes des organes de liaison, une vitesse de rotation variable pour une alimentation hydraulique donnée. L'enseignement de ce document ne peut donc constituer l'état de la technique de référence.

La présente invention a pour but de proposer un mécanisme d'accouplement homocinétique, qui évite l'inconvénient présenté par celui du brevet français 2 274 827 ci-dessus analysé en décalant les axes des arbres menant et mené et des deux tiges d'un même couple, mais en choisissant ce décalage de façon que le pivotement relatif de l'arbre menant par rapport à l'arbre mené puisse s'effectuer au moyen d'un contre-losange articulé malgré l'existence dudit décalage. Selon l'invention, on a constaté qu'un tel mécanisme constituait bien un accouplement homocinétique malgré le décalage des axes des arbres menant et mené. L'accouplement selon l'invention met donc en œuvre deux arbres, dont les axes ne sont pas concourants et dont la distance, mesurée sur leur perpendiculaire commune, est égale à d; on munit chacun des deux arbres d'un organe de liaison, analogue au cylindre décrit dans l'état de la technique pour le «joint de Koenigs», les deux organes de liaison étant reliés entre eux par au moins un couple de tiges articulées entre elles; les deux tiges d'un même couple sont équidistantes des axes des deux arbres et leur distance, mesurée sur leur perpendiculaire commune, est égale à d. Il est clair que, dans ces conditions, si les deux arbres se trouvent dans le prolongement l'un de l'autre, les deux tiges d'un même couple n'ont pas un axe commun et ne peuvent donc plus tourner autour dudit axe commun; il en résulte que la direction de l'axe d'articulation d'un couple de tiges est maintenue constante, quel que soit l'angle des axes des deux arbres, cette direction étant, bien entendu, perpendiculaire au plan constitué par les axes des deux arbres lorsque ceux-ci ne sont pas dans le prolongement l'un de l'autre. On voit donc que l'accouplement selon l'invention évite tous les inconvénients présentés par les accouplements du type «joint de Koenigs» tout en permettant de bénéficier des mêmes avantages, à savoir la possibilité d'un grand débattement angulaire des deux arbres et la conservation de la vitesse angulaire.

La présente invention a, en conséquence, pour objet, le produit industriel nouveau que constitue un mécanisme d'accouplement homocinétique entre un arbre menant rotatif d'axe $\Delta_1$ et un arbre mené rotatif d'axe $\Delta_2$, ce mécanisme étant, notamment, utilisable en robotique, les deux arbres portant, chacun, un organe de liaison de même axe que l'arbre correspondant, chacun de ces deux organes de liaison étant maintenu dans un manchon par rapport auquel il tourillonne, les deux organes de liaison étant reliés entre eux par au moins un couple de deux tiges assemblées par une articulation de rotation dont l'axe d'articulation est parallèle à une direction $\Delta_0$ perpendiculaire à la fois aux deux axes $\Delta_1$ et $\Delta_2$, chacune des deux tiges pouvant coulisser et tourillonner librement dans l'organe de liaison qui lui est associé, de façon que son axe reste parallèle à l'axe de l'arbre qui porte ledit organe de liaison, les distances des axes des deux tiges d'un couple de tiges par rapport à celui des axes $\Delta_1$ et $\Delta_2$ qui leur est parallèle étant égales à la même valeur r pour tous les couples de tiges, tous les axes d'articulation de deux tiges d'un couple de tiges étant parallèles, les manchons étant reliés par un contre-losange articulé permettant un pivotement de chaque manchon autour de l'un ou l'autre de deux axes d'articulation parallèles à $\Delta_0$ et disposés à une distance r de l'axe du manchon correspondant, caractérisé par le fait que, pour assurer un fonctionnement fiable quel que soit l'angle $\Delta_1$, $\Delta_2$ entre 45 et 315° et, notamment, pour 180°, les axes $\Delta_1$ et $\Delta_2$ et les axes des deux tiges de chaque couple de tiges sont distants d'une même longueur d non nulle mesurée selon $\Delta_0$.

Dans un mode préféré de réalisation, le contre-losange articulé, qui relie les deux manchons, est constitué de deux couples de biellettes de longueurs égales, les deux couples de biellettes étant disposés symétriquement par rapport au plan perpendiculaire à $\Delta_0$ et équidistants de $\Delta_1$ et $\Delta_2$, chaque biellette d'un couple reliant deux axes d'articulation portés par les manchons, l'un de ces axes appartenant au manchon menant et l'autre appartenant au manchon mené; les tiges coulissent et tourillonnent dans des alésages avec interposition de fourreaux à billes; le mécanisme comporte trois ou quatre couples de tiges, les tiges associées aux organes de liaison menant et mené étant régulièrement réparties respectivement autour des axes $\Delta_1$ et $\Delta_2$.

Il est précisé qu'une articulation mettant en œuvre un contre-losange articulé est une articulation connue dans l'état de la technique et a été décrite dans l'ouvrage «Leçons de Cinématique» de Raoul Bricard, tome II, pages 155 à 157, édité par Gauthier-Villars en 1927.

Pour mieux faire comprendre l'objet de l'invention, on va en décrire maintenant, à titre d'exemple purement illustratif et non limitatif, un mode de réalisation représenté schématiquement sur le dessin annexé.

Sur ce dessin:

la fig. 1 représente, schématiquement en perspective, un mécanisme, selon l'invention, représenté avec un seul couple de tiges;

la fig. 2 représente, schématiquement, le mécanisme de la fig. 1 vu en plan, perpendiculairement à un plan parallèle aux axes $\Delta_1$ et $\Delta_2$ des deux arbres à accoupler;

la fig. 3 représente, schématiquement, l'articulation que l'on peut prévoir entre les deux manchons où tourillonnent les organes de liaison associés aux deux arbres du mécanisme, cette articulation étant représentée en élévation;

la fig. 4 représente, en perspective, la zone d'articulation des manchons d'un mécanisme d'accouplement selon l'invention.

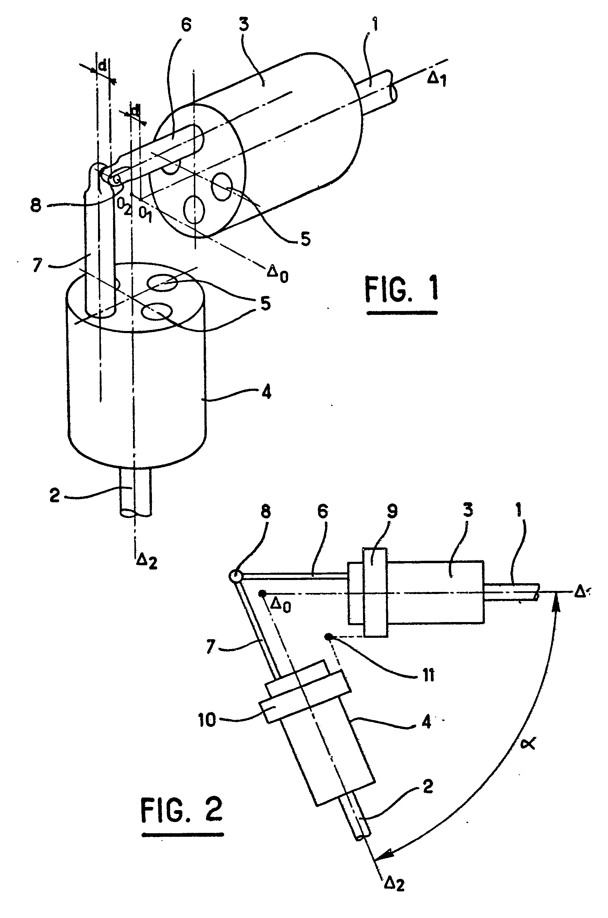

En se référant à la fig. 1, on voit que l'on a désigné par 1 l'arbre menant d'un mécanisme d'accouplement et par 2 l'arbre mené. L'axe de l'arbre 1 est désigné par $\Delta_1$; l'axe de l'arbre 2 est désigné par $\Delta_2$; la distance des axes $\Delta_1$ et $\Delta_2$, mesurée sur leur perpendiculaire commune $\Delta_0$, est désignée sur la figure par $O_1 O_2 = d$. Les arbres 1 et 2 sont solidaires respectivement de deux cylindres 3 et 4 constituant des organes de liaison. Les cylindres 3 et 4 ont respectivement comme axes les axes $\Delta_1$ et $\Delta_2$; ils comportent chacun quatre alésages 5 ayant des axes parallèles à l'axe des cylindres dans lesquels ils sont pratiqués; les axes des alésages 5 sont tous situés à la même distance des axes des cylindres 3 et 4 dans lesquels ils sont pratiqués et ils ont tous le même rayon. Dans chacun des alésages 5 du cylindre 3, on dispose une tige 6; dans chacun des alésages 5 du cylindre 4, on dispose une tige 7. Les tiges 6 et 7 constituent quatre couples de tiges 6–7, les axes des tiges d'un même couple étant distants de la longueur d, mesurée sur leurs perpendiculaires communes respectives. Les perpendiculaires communes aux axes des tiges 6, 7 des quatre couples sont parallèles à la droite $\Delta_0$. Sur la fig. 1, pour une question de clareté, on a représenté uniquement un couple de tiges 6–7. Les tiges 6 et 7 d'un même couple sont reliées entre elles par un axe d'articulation 8.

En se reportant à la fig. 2, on voit que les deux organes de liaison constitués par les cylindres 3 et 4 sont disposés dans des manchons 9 et 10 respectivement. Les cylindres 3 et 4 peuvent tourillonner dans leurs manchons 9 et 10 avec interposition d'un palier à billes. Les manchons 9 et 10 sont donc maintenus fixes par rapport à la rotation des arbres 1 et 2. Les manchons 9 et 10 sont articulés l'un par rapport à l'autre pour permettre de faire varier l'angle α des axes $\Delta_1$ et $\Delta_2$ vus en projection sur un plan perpendiculaire à $\Delta_0$. Sur la fig. 2, on a représenté schématiquement en 11 un axe d'articulation permettant le pivotement du manchon 10 par rapport au manchon 9; bien entendu, l'axe 11 est parallèle à $\Delta_0$.

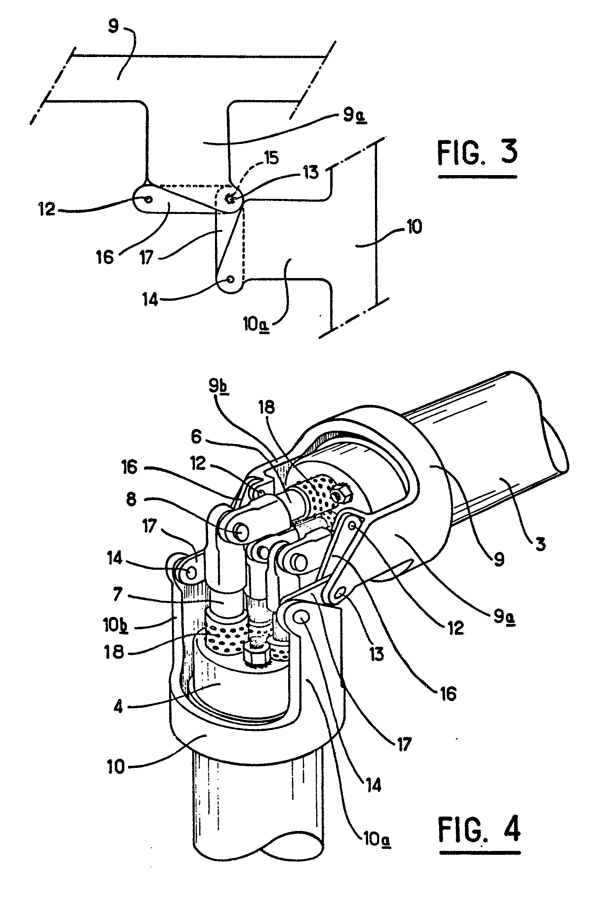

Sur la fig. 3, on a représenté, schématiquement, le mode d'articulation adopté pour le mouvement relatif des manchons 9 et 10. Ce mode d'articulation constitue simplement la mise en œuvre d'une articulation de type connu dénommée «contre-losange articulé». Le manchon 9 porte deux pattes 9a, 9b symétriques par rapport à l'axe $\Delta_1$ et sensiblement parallèles à cet axe; de même, le manchon 10 porte deux pattes 10a, 10b symétriques par rapport à $\Delta_2$ et sensiblement parallèles à $\Delta_2$. Les pattes 9a, 10a sont, lorsque $\Delta_1$ et $\Delta_2$ sont alignés, dans le prolongement l'une de l'autre; il en est de même des pattes 9b, 10b. Les pattes 9a et 9b portent, au voisinage de leurs extrémités libres, deux axes 12 et 13 parallèles à $\Delta_0$ et équidistants de $\Delta_1$; de même, les pattes 10a, 10b portent, au voisinage de leurs extrémités libres, deux axes 14 et 15 parallèles à $\Delta_0$ et équidistants de $\Delta_2$. Les axes 12 et 14 sont dans le prolongement l'un de l'autre, de même que les axes 13 et 15, lorsque $\Delta_1$ et $\Delta_2$ sont dans le prolongement l'un de l'autre. Les axes 12 et 15 sont reliés par une biellette 16; les axes 13 et 14 sont reliés par une biellette 17. On voit que l'on réalise ainsi un contre-losange articulé. Si l'on suppose l'axe $\Delta_1$ fixe, on peut faire pivoter l'axe $\Delta_2$ soit autour d'un axe de rotation défini par l'axe 13, soit autour d'un axe de rotation défini par l'axe 12, les axes 12 et 13 étant symétriques par rapport à l'axe $\Delta_1$ et distants d'une longueur égale au diamètre du cylindre dont les axes des tiges 6 constituent des génératrices. De la même façon, si $\Delta_2$ est supposé fixe, le pivotement de $\Delta_1$ peut se faire soit autour de l'axe 14, soit autour de l'axe 15. Sur la fig. 3, on a représenté un axe 15 ayant un plus grand diamètre que l'axe 13 pour pouvoir le dessiner mais, en fait, les diamètres sont identiques. L'avantage de ce type d'articulation des manchons 9 et 10 est que l'on peut, de la sorte, réduire les longueurs des parties des tiges 6 et 7 qui se trouvent à l'extérieur des alésages 5, puisque l'on adopte l'un ou l'autre de deux axes de pivotement possibles selon que l'angle α est inférieur ou supérieur à 180°.

Les tiges 6 et 7 coulissent et tourillonnent dans leurs alésages 5 avec interposition de fourreaux à billes 18 afin d'améliorer le rendement mécanique de l'accouplement.

**Revendications**

1. Mécanisme d'accouplement homocinétique entre un arbre menant rotatif (1) d'axe $\Delta_1$ et un arbre mené rotatif (2) d'axe $\Delta_2$, ce mécanisme étant, notamment, utilisable en robotique, les deux arbres (1, 2) portant chacun un organe de liaison (3, 4) de même axe que l'arbre correspondant, chacun de ces deux organes de liaison étant maintenu dans un manchon (9, 10) par rapport auquel il tourillonne, les deux organes de liaison étant reliés entre eux par au moins un couple de deux tiges (6, 7), assemblées par une articulation de rotation dont l'axe d'articulation (8) est parallèle à une direction $\Delta_0$ perpendiculaire à la fois aux deux axes $\Delta_1$ et $\Delta_2$, chacune des deux tiges (6, 7) pouvant coulisser et tourillonner librement dans l'organe de liaison (3, 4) qui lui est associé, de façon que son axe reste parallèle à l'axe de l'arbre qui porte ledit organe de liaison, les distances des axes des deux tiges (6, 7) d'un couple de tiges par rapport à celui des axes $\Delta_1$ et $\Delta_2$ qui leur est parallèle étant égales à la même valeur r pour tous les couples de tiges, tous les axes d'articulation (8) de deux tiges (6, 7) d'un couple de tiges étant parallèles, les manchons (9, 10) étant reliés par un contre-losange articulé permettant un pivotement de chaque manchon (9, 10) autour de l'un ou l'autre de deux axes d'articulation ((12, 13) pour le manchon (9) et (14, 15) pour le manchon (10)) parallèles à $\Delta_0$ et disposés à une distance r de l'axe du manchon (9, 10) correspondant, caractérisé par le fait que, pour assurer un fonctionnement fiable quel que soit l'angle ($\Delta_1$, $\Delta_2$) entre 45 et 315° et, notamment, pour 180°, les axes $\Delta_1$ et $\Delta_2$ et les axes des deux tiges (6, 7) de chaque couple de tiges sont distants d'une même longueur d non nulle mesurée selon $\Delta_0$.

2. Mécanisme selon la revendication 1, caractérisé par le fait que le contre-losange articulé, qui relie les deux manchons (9, 10) est constitué de deux couples de biellettes (16, 17) de longueurs égales, les deux couples de biellettes étant disposés symétriquement par rapport au plan perpendiculaire à $\Delta_0$ et équidistants de $\Delta_1$ et $\Delta_2$, chaque biellette d'un couple reliant deux axes d'articulation portés par les manchons (9, 10), l'un de ces axes (12 pour la biellette 16 et 13 pour la biellette 17) appartenant au manchon menant (9) et l'autre (15 pour la biellette 16 et 14 pour la biellette 17) appartenant au manchon mené (10).

3. Mécanisme selon l'une des revendications 1 ou 2, caractérisé par le fait que les tiges (6, 7) coulissent et tourillonnent dans des alésages (5) avec interposition de fourreaux à billes (18).

4. Mécanisme selon l'une des revendications 1 à 3, caractérisé par le fait qu'il comporte trois ou quatre couples de tiges (6, 7), les tiges associées aux organes de liaison menant et mené étant régulièrement réparties respectivement autour des axes $\Delta_1$ et $\Delta_2$.

## Claims

1. A homo-kinetic coupling mechanism between a rotary driving shaft (1) with axis $\Delta_1$, and a rotary driven shaft (2) with axis $\Delta_2$, this mechanism being in particular usable in robotics, the two shafts (1, 2) each carrying a jointing element (3, 4) coaxial with the respective shaft, each one of these jointing elements being held in a sleeve (9, 10) in relation to which it is swivelling, the two jointing elements being interconnected by at least one couple of two rods (6, 7) joined up by a rotary articulation whose articulating pin (8) is parallel to a direction $\Delta_0$ perpendicular at the same time to the two axes $\Delta_1$ and $\Delta_2$, each one of the two rods (6, 7) being capable of freely sliding and swivelling in the jointing element (3, 4) which is associated therewith, so that its axis remains parallel with the axis of the shaft carrying the said jointing device, the distances of the axes of the two rods (6, 7) of a couple of rods in relation to that of the axes $\Delta_1$, $\Delta_2$ which is parallel there with being equal to the same value r for all the couples of rods, all the articulating pins (8) of the two rods (6, 7) of a couple of rods being parallel, the sleeves (9, 10) being jointed by an articulated rhombic interlinkage allowing each sleeve (9, 10) to swivel around one or the other of the two articulating pins ((12, 13) for sleeve (9) and (14, 15) for sleeve (10)) parallel to $\Delta_0$ and disposed at a distance r from the axis of the corresponding sleeve (9, 10) characterised in that to ensure a reliable functioning whatever the angle ($\Delta_1$, $\Delta_2$) being between 45 and 315° and, in particular for 180°, the axes $\Delta_1$, $\Delta_2$ and the axes of the two rods (6, 7) of each couple of rods being interspaced by the same distance d, not equal to zero, measured along $\Delta_0$.

2. A mechanism according to Claim 1, characterised in that the articulated rhombic interlinkage which connects the two sleeves (9, 10) is constituted by two couples of links (16, 17) of equal length, the two couples of links being disposed symmetrically in relation to the plane perpendicular to $\Delta_0$ and equidistant from $\Delta_1$ and $\Delta_2$, each link of a couple interconnecting two articulating pins carried by sleeves (9, 10), one of these pins (12 for link 16 and 13 for link 17) belonging to the driving sleeve (9) and the other (15 for link 16 and 14 for link 17) belonging to the driven sleeve (10).

3. A mechanism according to one of Claims 1 or 2, characterised in that the rods (6, 7) slide and swivel in bores (5) with the interposition of bushes with ball-bearings (18).

4. A mechanism according to one of Claims 1 to 3, characterised in that it comprises three or four couples of rods (6, 7) the rods associated with the jointing driving or driven elements being regularly interspaced around respectively axes $\Delta_1$ and $\Delta_2$.

## Patentansprüche

1. Homokinetische Kupplungsvorrichtung zwischen einer Antriebsdrehwelle (1) mit der Achse $\Delta_1$ und einer Abtriebsdrehwelle (2) mit der Achse $\Delta_2$, wobei diese Vorrichtung insbesondere in der Robotertechnik verwendbar ist, die beiden Wellen (1, 2) jeweils ein Verbindungsglied (3, 4) mit derselben Achse wie die entsprechende Welle tragen, jedes der beiden Verbindungsglieder in einer Muffe (9, 10) gehalten wird, im Verhältnis zu der es sich dreht, die beiden Verbindungsglieder untereinander durch mindestens ein Stangenpaar (6, 7) verbunden sind, das durch ein Drehgelenk zusammengefügt ist, dessen Drehachse (8) parallel zu einer Richtung $\Delta_0$ senkrecht zu den beiden Achsen $\Delta_1$ und $\Delta_2$ verläuft, wobei jede der beiden Stangen (6, 7) frei in dem Verbindungsglied (3, 4), das ihm zugeordnet ist, gleiten und sich drehen kann, so dass ihre Achse parallel zu der Achse der Welle bleibt, die das genannte Verbindungsglied trägt, wobei die Abstände der Achsen der beiden Stangen (6, 7) eines Stangenpaares in bezug auf die Achse $\Delta_1$ und $\Delta_2$, die parallel zu ihnen verläuft, den gleichen Wert r für alle Stangenpaare haben, alle Drehachsen (8) von 2 Stangen (6, 7) eines Stangenpaares parallel verlaufen, die Muffen (9, 10) durch eine gelenkige Gegenraute verbunden sind, wodurch eine Schwenkung jeder Muffe (9, 10) um die eine oder andere der beiden Drehachsen (12, 13) für die Muffe (9) und (14, 15) für die Muffe (10) möglich ist, die parallel zu $\Delta_0$ und in einem Abstand r von der entsprechenden Achse der Muffe (9, 10) angeordnet sind, dadurch gekennzeichnet, dass zur Sicherstellung eines zuverlässigen Betriebes bei irgendeinem Winkel ($\Delta_1$, $\Delta_2$) zwischen 45 und 315°, insbesondere bei 180°, die Achsen $\Delta_1$ und $\Delta_2$ und die Achsen der beiden Stangen (6, 7) jedes Stangenpaares um eine gleiche, nicht Null tragende Länge voneinander entfernt sind, die längs $\Delta_0$ gemessen wird.

2. Vorrichtung gemäss Anspruch 1, dadurch gekennzeichnet, dass die gelenkige Gegenraute, die die beiden Muffen (9, 10) verbindet, aus zwei Paaren von gleich langen Schwingarmen (16, 17) besteht, wobei die beiden Schwingarmpaare symmetrisch zur Ebene senkrecht zu $\Delta_0$ und im gleichen Abstand zu $\Delta_1$ und $\Delta_2$ angeordnet sind, jeder Schwingarm eines Paares zwei durch die Muffen (9, 10) getragene Drehachsen verbindet, wobei eine der Achsen (12 für den Schwingarm 16 und 13 für den Schwingarm 17) zur Antriebsmuffe (9) und die andere (15 für den Schwingarm 16 und 14 für den Schwingarm 17) zur Abtriebsmuffe (10) gehört.

3. Vorrichtung gemäss einem der Ansprüche 1 oder 2, dadurch gekennzeichnet, dass die Stangen (6, 7) in Bohrungen (5) unter Einfügung von Kugellaufbüchsen (18) gleiten und sich drehen.

4. Vorrichtung gemäss einem der Ansprüche 1 bis 3, dadurch gekennzeichnet, dass sie drei oder vier Paare von Stangen (6, 7) aufweist, die den antreibenden und angetriebenen Verbindungselementen zugeordnet und jeweils gleichmässig um die Achsen $\Delta_1$ und $\Delta_2$ verteilt sind.

FIG. 1

FIG. 2

FIG. 3

FIG. 4